Europäisches Patentamt

European Patent Office

Office européen des brevets

(11) Numéro de publication: **0 037 857**
**B1**

(12) **FASCICULE DE BREVET EUROPEEN**

(45) Date de publication du fascicule du brevet: **23.01.85**

(21) Numéro de dépôt: **80200333.5**

(22) Date de dépôt: **14.04.80**

(51) Int. Cl.⁴: **H 04 B 9/00**

(54) **Procédé de transmission d'information analogique à travers des fibres optiques et installation pour le réaliser.**

(43) Date de publication de la demande:
**21.10.81 Bulletin 81/42**

(45) Mention de la délivrance du brevet:
**23.01.85 Bulletin 85/04**

(84) Etats contractants désignés:
**AT BE CH DE FR GB IT LI LU NL SE**

(56) Documents cités:
**US-A-3 566 127**
**US-A-3 875 534**
**US-A-3 988 614**

**PATENT ABSTRACTS OF JAPAN, vol. 3, no. 92, 4 août 1979 page 152 E 128**
**LASER FOCUS, vol. 14, no. 10, octobre 1978 Newton, MA-USA J. STRAUS "Linearized transmitters for analog fiber links", pages 54-61**
**TECHNICAL DIGEST OF THE 1977 INTERNATIONAL CONFERENCE ON INTEGRATED OPTICS AND OPTICAL FIBER COMMUNICATION", 18-20 et 22 juillet 1977, Tokyo/Osaka, IEEE of Japan, Tokyo, H. ISHIO "A preliminary experiment on wavelength division multiplexing transmission using LED", pages 493-496**

(73) Titulaire: **ATELIERS DE CONSTRUCTIONS ELECTRIQUES DE CHARLEROI (ACEC) Société Anonyme**
**Avenue Lloyd George 7**
**B-1050 Bruxelles (BE)**

(72) Inventeur: **Franckart, Jean-Marie**
**Rue de Berzée, 13**
**B-6420 Thy-le-Château (BE)**

(74) Mandataire: **Bossard, Franz et al**
**ACEC - Service des Brevets Boîte Postale 4**
**B-6000 Charleroi (BE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention a pour objet un procédé de transmission d'information entre un poste émetteur et au moins un poste récepteur dans lequel des signaux électriques analogiques sont transformés en signaux lumineux dans un premier émetteur à laser à semi-conducteur relié à une fibre optique, dans lequel le premier émetteur à laser à semi-conducteur est associé à un deuxième émetteur à laser à semi-conducteur relié à une fibre optique auquel est appliqué un signal analogique de correction engendré à partir du signal électrique analogique appliqué au premier émetteur à laser, par soustraction d'un signal électrique analogique fourni par un récepteur de contrôle, sensible à l'intensité lumineuse émise par le premier émetteur à laser dans la fibre optique dans lequel, on détecte individuellement, dans chaque poste récepteur, dans deux dispositifs détecteurs différents les signaux émis par les dits premier et deuxième émetteurs à laser pour fournir deux signaux électriques analogiques différents, dans lequel dans chaque poste récepteur, le signal électrique en avance est retardé dans un circuite à retard pour compenser la différence dans les temps de propagation entre les deux signaux, et dans lequel les deux signaux électrique différents ainsi compensés sont combinés l'un avec l'autre dans un dispositif mélangeur approprié.

Un tel procédé de transmission est connu, par exemple, par la demande de brevet japonais JA—A1—5471504 (patent abstracts of Japan Vol. 3 n° 92 page 152 E 128). Ce procédé de transmission d'informations par fibre optique utilise la technique de compensation "feedforward" optique dans laquelle les signaux lumineux émis par deux émetteurs optiques sont envoyés sur deux conducteurs à fibres optiques parallèles et sont détectés dans deux dispositifs détecteurs différents pour fournir deux signaux électriques différents. Ces deux signaux sont combinés l'un avec l'autre dans un dispositif mélangeur approprié, un des deux signaux étant-retardé dans un circuit de retard avant d'être combiné avec l'autre.

Un tel procédé de transmission est connu aussi, par exemple, sous le nom de compensation "feedforward" optique mentionné dans Laser Focus, octobre 1978 p. 58. Selon le procédé décrit dans cette publication, les signaux lumineux produits par les deux lasers sont additionnés et envoyés sur un seul conducteur à fibre optique de départ.

Lorsque la transmission d'information selon les procédés connus est effectuée sur des distances de quelques dizaines de mètres, des résultats satisfaisants sont obtenus. Il n'en est plus de même lorsque la distance entre postes émetteur et récepteur dépasse le kilomètre. La raison est que, pratiquement, la longueur d'onde de la lumière émise par un des deux lasers à semiconducteur diffère toujours en peu de celle émise par l'autre. Comme la vitesse de propagation d'un signal lumineux dans la fibre optique est fonction de la longueur d'onde propagée, la lumière émise par un des lasers n'arrive pas en même temps à l'endroit du poste récepteur que celle émise par l'autre laser. Si, comme on vient de le dire, la distance entre émetteurs et récepteurs se compte en kilomètres, même une petite variation de l'écart entre les longueurs d'ondes émises par les deux émetteurs peut produire des décalages sensibles entre les signaux à l'endroit des récepteurs.

L'invention a pour but de remédier à ces inconvénients, notamment dans le cas où les signaux lumineux émis par un seul poste émetteur sont détectés par une série de plusieurs postes récepteurs disposés à des distances échelonnées le long d'une voie de communication à fibres optiques de plusieurs kilomètres de longueur.

L'invention est caractérisée en ce que dans chaque poste récepteur, au moyen d'un dispositif de réglage complexe, sensible d'une part au niveau de porteuses de référence et d'autre part au décalage entre les signaux détectés par des détecteurs, on influence d'une part des amplificateurs variables ou atténuateurs et d'autre part un circuit à retard électrique et on restitue au moyen d'un mélangeur un signal identique au signal compensé émis.

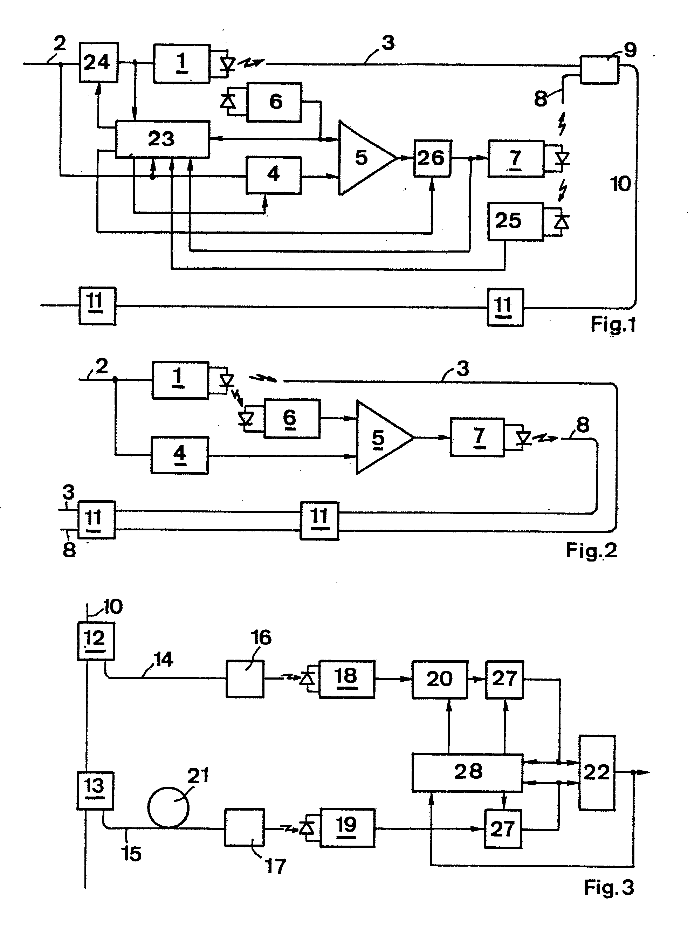

L'invention est expliquée ci-dessous par rapport à une installation de transmission d'information analogique à travers des fibres optiques en se référant au dessin annexé. Dans ce dessin, les figures 1 et 3 représentent des schémas blocs respectivement d'une poste émetteur et d'un poste récepteur suivant l'invention. La figure 2 représente une variante en soi connue de la figure 1 pour laquelle l'invention est applicable également.

A la figure 1, un signal électrique analogique, par example un signal de télévision est appliqué à l'entrée d'un premier émetteur à laser à semi-conducteur 1 via un conducteur 2. L'émetteur à laser 1 est relié à une fibre optique 3. Le conducteur 2 est relié d'autre part via un circuit à retard 4 à une des entrées d'un circuit de soustraction 5. Le signal lumineux émis par l'émetteur à laser 1 est détecté par un récepteur de contrôle 6 et retransformé en un signal électrique, analogique. Ce dernier est appliqué à l'autre entrée du circuit de soustraction 5. Pour permettre l'adaptation correcte du niveau du signal de sortie du récepteur de contrôle 6, ce dernier peut comprendre un circuit d'amplification réglable de sortie. La sortie du circuit de soustraction 5 est appliqué à l'entrée d'un deuxième émetteur à laser 7 également relié à une fibre optique 8. Les fibres optiques 3 et 8 sont appliquées à un coupleur optique 9 dont la fibre de propagation 10 est très longue (plusieurs kilomètres). Plusieurs postes récepteurs 11 sont échelonnés le long de cette fibre de propagation.

La figure 2 montre un variante de la figure 1. Selon cette variante le coupleur optique est omis et les fibres optiques 3 et 8 servent directement à véhiculer individuellement les signaux émis respectivement par le premier émetteur à laser 1 et par le deuxième émetteur à laser 7. Les postes récepteurs sont alors raccordés aux deux fibres 3 et 8.

La figure 3 montre plus en détail un poste récepteur. Lorsque le poste récepteur coopère avec un poste émetteur selon la figure 1 deux coupleurs optiques 12 et 13 sont branchés sur la fibre de propagation 10 et sont reliés respectivement par des fibres 14 et 15 à des filtres optiques très sélectifs, respectivement 16 et 17. Les filtres 16 et 17 permettent de séparer l'un de l'autre les deux signaux lumineux engendrés respectivement par le premier émetteur à laser 1 et le deuxième émetteur à laser 7 à condition que les longueurs d'onde des émetteurs à laser diffèrent d'une quantité suffisante l'une de l'autre, ce qui est très facile à réaliser. Aux sorties des filtres 16 et 17 sont disposés des dispositifs détecteurs 18 et 19 qui transforment les signaux lumineux analogiques reçus en signaux électriques analogiques. Chacun de ces dispositifs détecteurs 18 et 19 peut être doté d'un circuit d'amplification réglable afin d'ajuster les niveaux des signaux de sortie correspondants.

Dans le poste émetteur, les émetteurs à laser 1 et 7 ne possèdent pas des caractéristiques linéaires. Par conséquent, le signal émis par l'émetteur à laser 1 et reçu après filtrage dans le filtre 16 dans le dispositif détecteur 18 doit être corrigé pour le défaut de linéarité. Cette correction est transmise par l'émetteur à laser 7 et reçue, après filtrage dans le filtre 17 à l'endroit de chaque poste récepteur, dans le dispositif détecteur 19. Toutefois, suite aux différences entre les vitesses de propagation dans la fibre 10, il existe un décalage de temps entre le signal à la sortie du dispositif détecteur 18 et la correction correspondante à la sortie du dispositif 19. Ce décalage est compensé par au moins un circuit à retard dans le trajet du signal arrivant le premier. Le circuit à retard peut être soit un circuit à retard électrique 20, soit une boucle 21 dans une des fibres 14 ou 15. Après compensation des décalages dus aux vitesses de propagation différentes des deux signaux lumineux, les signaux électriques à la sortie des détecteurs 18 et 19 sont combinés dans un mélangeur 22 dont la sortie fournit un signal identique, à une erreur négligeable près, au signal appliqué au conducteur 2 (figure 1). Le niveau de signal à la sortie du mélangeur 22 peut aussi être ajusté à l'aide d'un circuit d'amplification réglable prévu dans le mélangeur 22.

Lorsque le poste récepteur coopère avec un poste émetteur selon la figure 2, les deux coupleurs optiques 12 et 13 sont branchés l'un sur la fibre 3, l'autre sur la fibre 8 et les filtres optiques sélectifs ne sont pas nécessaires. Les fibres optiques 14 et 15 sont alors directement reliées aux détecteurs 18 et 19. Dans le cas d'un émetteur selon la figure 2, il n'est pas nécessaire de veiller à une différence suffisante entre les longueurs d'onde des signaux lumineux propagés sur les fibres 3 et 8 puis qu'il n'est pas nécessaire de les séparer au moyen de filtres. Néanmoins, il n'est pratiquement pas possible de trouver des émetteurs à laser à semi-conducteur identiques, émettant des signaux lumineux de même longueur d'onde aux mêmes températures et invariables lors du vieillissement.

Dans les circuits des figures 1 et 2, des circuits de réglage d'amplitude des signaux lumineux sont en général nécessaires ou en tout cas peuvent être prévus, soit seulement pour le signal émis par l'émetteur à laser 1, soit pour les signaux émis par les émetteurs à laser 1 et 7. Ces circuits de réglage d'amplitude agissent de préférence automatiquement, en fonction par exemple du niveau de porteuses de référence ajoutées au signal de télévision appliqué à l'entrée de l'émetteur à laser concerné et de consignes déterminées pour ces niveaux. Chaque réglage peut être réalisé à l'aide d'un régulateur individuel, mais, de préférence un seul régulateur complexe 23 reçoit les différents signaux de référence. Ces signaux sont, par exemple, le signal à transmettre véhiculé par le conducteur 2, la sortie du circuit 5 et la sortie d'un récepteur de contrôle 25. Le régulateur complexe 23 fournit plusieurs signaux de commande destinés à ajuster un amplificateur réglable 24 en amont de l'émetteur à laser 1 et à déterminer le délai imposé par le circuit à retard 4. Si le signal de correction émis par l'émetteur à laser 7 doit aussi être doté d'un réglage d'amplitude, le régulateur complexe 23 commande en outre un amplificateur variable 26 en amont de l'émetteur à laser 7. De toute façon, dans les récepteurs des amplificateurs variables ou atténuateurs 27 doivent être prévus. Ces amplificateurs 27 sont commandés automatiquement par un dispositif de réglage complexe 28 en fonction par exemple d'un détecteur du niveau de porteuses de référence y incorporé. Les délais imposés par les circuits à retard 20 et 21 nécessitent des retouches dues notamment aux changements relatifs que subissent les longueurs d'onde émises par les émetteurs à laser 1 et 7 en vieillissant ou que subissent les indices de réfraction des fibres optiques 3, 8 et 10. Par conséquent, le dispositif de réglage complexe 28 permet aussi d'ajuster les retards du circuit 20. Les circuits 4 et 20 et les amplificateurs 24, 26, 27 ajustés continuellement par les régulateur 23 et dispositif de réglage 28 permettent de racheter automatiquement les effets des variations dans le temps des caractéristiques des émetteurs à laser et des circuits y associés et de maintenir ainsi l'installation en parfait ordre de fonctionnnement. Les régulateur 23 et dispositif de réglage 28 peuvent comprendre des dispositifs d'analyse de certains signaux parmi les signaux à transmettre ou ajoutés à ces signaux. Comme dispositif d'analyse, on peut utiliser par exemple des micro-ordinateurs qui effectuent des analyses diverses et optimisent les différents réglages.

Plusieurs variantes des circuits et installations décrits peuvent être envisagés. Par exemple, à la figure 3, le coupleur 13 pourrait être branché en aval du coupleur 12 sur la fibre 14. Selon une autre variante les coupleurs 12 et 13 pourraient être remplacés par un seul coupleur doté d'un dispositif ou associé à un dispositif à deux sorties, l'un fournissant la composante relative à une première longueur d'onde envoyée sur la fibre 14 et l'autre relatif à une deuxième longueur d'onde envoyée sur la fibre 15.

## Revendications

1. Procédé de transmission d'information entre un poste émetteur et au moins un poste récepteur (11) dans lequel des signaux électriques analogiques sont transformés en signaux lumineux dans un premier émetteur à laser à semi-conducteur (1) relié à une fibre optique (3), dans lequel le premier émetteur à laser à semi-conducteur (1) est associé à un deuxième émetteur à laser à semi-conducteur (7) relié à une fibre optique (8) auquel est appliqué un signal analogique de correction engendré à partir du signal électrique analogique appliqué au premier émetteur à laser (1), par soustraction d'un signal électrique analogique fourni par un récepteur de contrôle (6), sensible à l'intensité lumineuse émise par le premier émetteur à laser (1) dans la fibre optique (3), et dans lequel on détecte individuellement, dans chaque poste récepteur (11), dans deux dispositifs détecteurs différents (18, 19), les signaux émis par les dits premier (1) et deuxième (7) émetteurs à laser pour fournir deux signaux électriques analogiques différents, dans lequel dans chaque poste récepteur (11), le signal électrique en avance est retardé dans un circuit à retard (20, 21) pour compenser la différence dans les temps de propagation entre les deux signaux, et dans lequel les deux signaux électriques différents ainsi compensés sont combinés l'un avec l'autre dans un dispositif mélangeur (22) approprié, caractérisé en ce que dans chaque poste récepteur (11), au moyen d'un dispositif de réglage complexe (28), sensible d'une part au niveau de porteuses de référence et d'autre part au décalage entre les signaux détectés par les détecteurs (18, 19), on influence d'une part des amplificateurs ou atténuateurs variables (27) et d'autre part un circuit à retard électrique (20) et on restitue au moyen du mélangeur (22) un signal identique au signal compensé émis.

2. Procédé suivant la revendication 1, caractérisé en ce que, dans le poste émetteur, au moyen d'un régulateur ou ensemble de régulateurs (23) sensible à des signaux de référence on ajuste un amplificateur réglable (24) en amont du premier émetteur à laser (1).

3. Procédé suivant une des revendications 1 ou 2, caractérisé en ce qu'au moyen du régulateur (23), on commande un amplificateur variable (26) en amount du deuxième émetteur à laser (7).

4. Installation pour réaliser le procédé suivant et des revendications précédentes, caractérisée en ce que les dispositfs régulateurs ou de réglage (23, 28) comprennent un micro-ordinateur.

## Patentansprüche

1. Verfahren zur Informationsübertragung zwischen einer Sendestation und mindestens einer Empfangsstation (11), bei dem in einem ersten, mit einer Lichtleitfaser (3) verbundenen Halbleiterlaser-Sender (1) analoge elektrische Signale in Lichtsignale umgewandelt werden; bei dem der erste Halbleiterlaser-Sender (1) mit einem zweiten, mit einer Lichtleitfaser (8) verbundenen Halbleiterlaser-Sender (7) kombiniert ist, auf den ein analoges Korrektursignal gegeben wird, das durch Differenzbildung zwischen dem auf den ersten Lasersender (1) gegebenen analogen elektrischen Signal und einem von einem Kontrollempfänger (6) gelieferten analogen elektrischen Signal erzeugt wird, der empfindlich gegenüber der von dem ersten Lasersender (1) in die Lichtleitfaser (3) gegebenen Lichtintensität ist; bei dem, in jeder Empfangsstation (11), in zwei verschiedenen Detektorvorrichtungen (18, 19), die von dem besagten ersten Lasersender (1) und dem besagten zweiten Lasersender (7) ausgesendeten Signale individuell nachgewiesen werden, wobei zwei verschiedene analoge elektrische Signale erhalten werden; bei dem in jeder Empfangsstation (11) das voreilende elektrische Signal in einer Verzögerungsschaltung (20, 21) verzögert wird, um die Laufzeitdifferenz zwischen den zwei Signalen zu kompensieren; und bei dem die zwei so kompensierten verschiedenen elektrischen Signale in einer geeigneten Mischvorrichtung (22) miteinander vereinigt werden, dadurch gekennzeichnet, daß bei jeder Empfangsstation (11) mittels einer komplexen Einstellvorrichtung (28), die einerseits gegenüber der Stärke der Bezugsträgerwellen, und andererseits gegenüber der Verschiebung zwischen den von den Detektoren (18, 19) nachgewiesenen Signalen empfindlich ist, einerseits variable Verstärker, oder Abschwächer (27), und andererseits eine elektrische Verzögerungsschaltung (20) beeinflußt werden, und daß mittels eines Mischers (22) ein Signal zurückgewonnen wird, das mit dem ausgesendeten kompensierten Signal identisch ist.

2. Verfahren gemäß Anspruch 1, dadurch gekennzeichnet, daß in jeder Sendestation mittels eines Reglers oder einer Reglereinheit (23), die gegenüber Bezugssignalen empfindlich ist, ein einstellbarer Verstärker (24) vor dem ersten Lasersender (1) angepaßt wird.

3. Verfahren gemäß einem der Ansprüche 1 oder 2, dadurch gekennzeichnet, daß mittels des Reglers (23) ein variabler Verstärker (26) vor dem zweiten Lasersender (7) gesteuert wird.

4. Anlage zur Verwirklichung des Verfahrens gemäß einem der vorhergehende Ansprüche, dadurch gekennzeichnet, daß die Regel- oder Einstellvorrichtungen (23, 28) einen Mikrocomputer aufweisen.

**Claims**

1. Method of transmitting information between a transmitting station and at least one receiving station (11), wherein electric analog signals are converted into luminous signals in a first semi-conductor laser transmitter (1) connected to an optical fibre (3), wherein the first semi-conductor laser transmitter (1) is associated with a second semi-conductor laser transmitter (7) connected to an optical fibre (8) to which there is applied a correcting analog signal generated from the electric analog signal applied to the first laser transmitter (1), by subtraction of an electric analog signal supplied by a monitoring receiver (6), sensitive to the luminous intensity emitted by the first laser transmitter (1) in the optical fibre (3), and wherein there are individually detected, in each receiving station (11), in two different detecting devices (18, 19), the signals emitted by the said first (1) and second (7) laser transmitters, in order to supply two different electric analog signals, wherein, in each receiving station (11), the leading electric signal is delayed in a delay circuit (20, 21) in order to compensate for the difference in the propagation times of the two signals, and wherein the two different electric signals thus compensated are combined with one another in an appropriate mixing device (22), characterised in that, in each receiving station (11), on the one hand variable amplifiers or attenuators (27) and on the other hand an electric delay circuit (20) are influenced by means of a complex adjusting device (28) sensitive on the one hand to the level of reference carriers and on the other hand to the deviation between the signals detected by the detectors (18, 19), and a signal identical to the compensated emitted signal is restored by means of the mixer (22).

2. Method according to claim 1, characterised in that, in the transmitting station, a variable amplifier (25) upstream of the first laser transmitter (1) is adjusted by means of a regulator or a set of regulators (23) sensitive to reference signals.

3. Method according to claim 1 or 2, characterised in that a variable amplifier (26) upstream of the second laser transmitter (7) is controlled by means of the regulator (23).

4. Installation for carrying out the method according to one of the preceding claims, characterised in that the regulating or adjusting devices (23, 28) comprise a microcomputer.

Fig.1

Fig.2

Fig.3

1